# EUROPÄISCHE PATENTSCHRIFT

(11) **EP 0 862 390 B1**
(45) Veröffentlichungstag und Bekanntmachung des Hinweises auf die Patenterteilung: **01.09.1999**
(21) Anmeldenummer: 96938131.8
(22) Anmeldetag: 07.11.1996
(51) Int. Cl.: A61C 17/34

(54) **ELEKTRISCHE ZAHNBÜRSTE**
ELECTRIC TOOTHBRUSH
BROSSE A DENTS ELECTRIQUE

(30) Priorität: 25.11.1995 DE 19544066
(43) Veröffentlichungstag der Anmeldung: 09.09.1998
(73) Patentinhaber: Braun Aktiengesellschaft, Frankfurt am Main (DE)
(72) Erfinder: HILFINGER, Peter, D-61350 Bad Homburg (DE); JUNG, Philipp, D-64289 Darmstadt (DE)
(86) Internationale Anmeldenummer: EP9604868
(87) Internationale Veröffentlichungsnummer: WO9719650

(56) Entgegenhaltungen:
- EP-A- 0 435 329
- GB-A- 2 250 428
- US-A- 5 165 131

## Beschreibung

Die Erfindung betrifft eine elektrische Zahnbürste mit einem Ein-/Ausschalter und mit einem Zeitglied zur Anzeige des Ablaufs mehrerer Putzzeitdauern eines Putzzyklus, das dazu dient, einem Benutzer im eingeschalteten Zustand der elektrischen Zahnbürste den Ablauf mindestens einer Putzzeitdauer anzuzeigen.

Eine derartige elektrische Zahnbürste ist aus der deutschen Offenlegungsschrift DE 33 09 687 A1 bekannt. Dort weist eine elektrische Zahnbürste einen Zeitschalter auf, der nach vorgegebenen Zeitspannen für den Benutzer wahrnehmbare Signale abgibt. Dieses Signal, das beispielsweise nach einer für das Putzen eines Quadranten der Zähne bzw. eines bestimmten Gebißabschnitts richtigen Putzzeitdauer abgegeben wird, veranlaßt den Benutzer zum Übergang auf den nächsten Quadranten bzw. Gebißabschnitt. Dort wird er nach Ablauf der zu diesem Quadranten bzw. Gebißabschnitt zugehörigen Putzzeitdauer durch ein erneutes Signal auf den Übergang zum nächsten Quadranten bzw. Gebißabschnitt hingewiesen. Dieses Verfahren wiederholt sich für alle vier Quadranten bzw. Gebißabschnitte, also bis alle Zähne des Benutzers gereinigt sind. Durch die für alle Quadranten bzw. Gebißabschnitte gleich langen Putzzeitdauern soll bei diesem Verfahren eine gleichmäßige Reinigung aller Zähne des Benutzers erreicht werden.

Es hat sich jedoch herausgestellt, daß die Benutzer dieses Verfahrens häufig den Bezug zu den vorgegebenen Putzzeitdauern verlieren. Ist zum Beispiel ein Benutzer mit der Reinigung eines Gebißabschnitts bzw. Quadranten noch nicht fertig, obwohl das entsprechende Signal schon auf das Ende der zu diesem Gebißabschnitt bzw. Quadranten zugehörigen Putzzeitdauer hingewiesen hat, so muß der Benutzer entweder, trotz unvollständiger Reinigung, auf den nächsten Gebißabschnitt bzw. Quadranten übergehen, oder die Reinigung fortsetzen mit der Folge einer fehlerhaften Putzzeitdauer bei dem nächsten Gebißabschnitt bzw. Quadranten. Eine gleichmäßige Reinigung der Zähne eines Benutzers ist deshalb in vielen Fällen nicht möglich.

Aufgabe der Erfindung ist es, eine elektrische Zahnbürste zu schaffen, mit der eine gleichmäßige Reinigung aller Gebißabschnitte bzw. Quadranten der Zähne eines Benutzers möglich ist.

Diese Aufgabe wird bei einer elektrischen Zahnbürste der eingangs genannten Art dadurch gelöst, daß mittels einer elektrischen Schalteinrichtung, die an das Zeitglied angeschlossen ist, der Beginn der zweiten oder gegebenenfalls weiteren Putzzeitdauer durch individuelle Betätigung der Schalteinrichtung durch den Benutzer vor Ablauf der vorhergehenden Putzzeitdauer auslösbar ist.

Mit dem Ablauf einer Putzzeitdauer wird also nicht sofort automatisch die nächste Putzzeitdauer gestartet. Der Benutzer wird also nur auf das Ende der zu einem Quadranten zugehörigen Putzzeitdauer hingewiesen, ist aber dadurch nicht gezwungen, sofort auf den nächsten Quadranten überzugehen. Im folgenden ist der Begriff "Quadrant" als gleichbedeutend mit "Gebißabschnitt" verwendet. Der Benutzer hat also die Freiheit, den derzeitigen Quadranten seiner Zähne in der Weise fertigzureinigen, wie es nach seiner Ansicht noch erforderlich ist. Erst danach geht der Benutzer auf den nächsten Quadranten über. Er löst nunmehr den Beginn der neuen Putzzeitdauer aus und beginnt mit der Reinigung dieses nächsten Quadranten seiner Zähne. Der Benutzer wird also nicht mehr von den aufeinanderfolgenden Putzzeitdauern von einem Quadranten zum nächsten getrieben, sondern er kann durch das Auslösen der nächsten Putzzeitdauer selbst bestimmen, wann er auf den nächsten Quadranten übergehen will. Es besteht somit keine Gefahr mehr, daß der Benutzer den Bezug zu den aufeinanderfolgenden Putzzeitdauern der verschiedenen Quadranten verliert. Damit ist es auch nicht mehr möglich, daß die verschiedenen Quadranten ungleichmäßig gereinigt werden. Statt dessen erhält der Benutzer das Ende der Putzzeitdauer eines Quadranten angezeigt und kann dann individuell auf den nächsten Quadranten übergehen und dessen Putzzeitdauer starten. Der Benutzer erhält hierdurch die Freiheit, daß er nicht zwingend bis zum Ablauf der jeweiligen Putzzeitdauer warten muß. Statt dessen kann er schon früher auf den nächsten Quadranten seiner Zähne übergehen, den Beginn der zugehörigen Putzzeitdauer auslösen und mit der Reinigung dieses nächsten Quadranten beginnen. Damit kann der Benutzer die Reinigung seiner Zähne individuell beispielsweise an Zahnlücken in einem Quadranten durch eine geringere Putzzeitdauer anpassen.

Bei einer anderen vorteilhaften Ausgestaltung der Erfindung wird die erste Putzzeitdauer mit dem Einschalten der elektrischen Zahnbürste durch den Ein-/Ausschalter automatisch ausgelöst. Der Benutzer muß also den ersten Beginn einer Putzzeitdauer nicht selbst auslösen, sondern dies wird automatisch durch das Einschalten der elektrischen Zahnbürste erreicht. Dies stellt keine Einschränkung der Freiheiten des Benutzers dar, da üblicherweise mit dem Einschalten der elektrischen Zahnbürste auch gleichzeitig mit der Reinigung der Zähne begonnen wird.

Bei einer vorteilhaften Weiterbildung der Erfindung ist als elektrische Schalteinrichtung zum Auslösen des Beginns der Putzzeitdauer ein Taster vorgesehen. Dem Benutzer wird also nicht nur der Ein-/Ausschalter für die elektrische Zahnbürste zur Verfügung gestellt, sondern zusätzlich die elektrisches Schalteinrichtung. Mit dieser kann der Benutzer die jeweiligen Putzzeitdauern individuell auslösen, also - abgesehen von der ersten Putzzeitdauer - unabhängig von dem Einschalten der elektrischen Zahnbürste.

Bei einer anderen Weiterbildung der Erfindung wird zur Anzeige des Ablaufs der Putzzeitdauer die elektrische Zahnbürste kurzzeitig mehrfach aus- und eingeschaltet. Der Benutzer der elektrischen Zahnbürste ist also nicht gezwungen, auf eine optische Anzeige oder dergleichen zu achten, sondern er wird unmittelbar durch das kurzzeitige mehrfache Aus- und Einschalten der elektrischen Zahnbürste darauf hingewiesen, daß die jeweilige Putzzeitdauer abgelaufen ist. Diese kurzzeitigen Unterbrechungen des Betriebs der elektrischen Zahnbürste werden von dem Benutzer sicher wahrgenommen, ohne daß dadurch die Reinigung der Zähne wesentlich beeinträchtigt wird.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind. Es zeigen:
- Fig. 1: eine schematische Darstellung einer erfindungsgemäßen elektrischen Zahnbürste,
- Fig. 2: ein schematisches Blockschaltbild von Bauteilen der elektrischen Zahnbürste nach der Fig. 1, und
- Fig. 3: ein schematisches Zeitdiagramm der Betriebszustände der elektrischen Zahnbürste nach der Fig. 1.

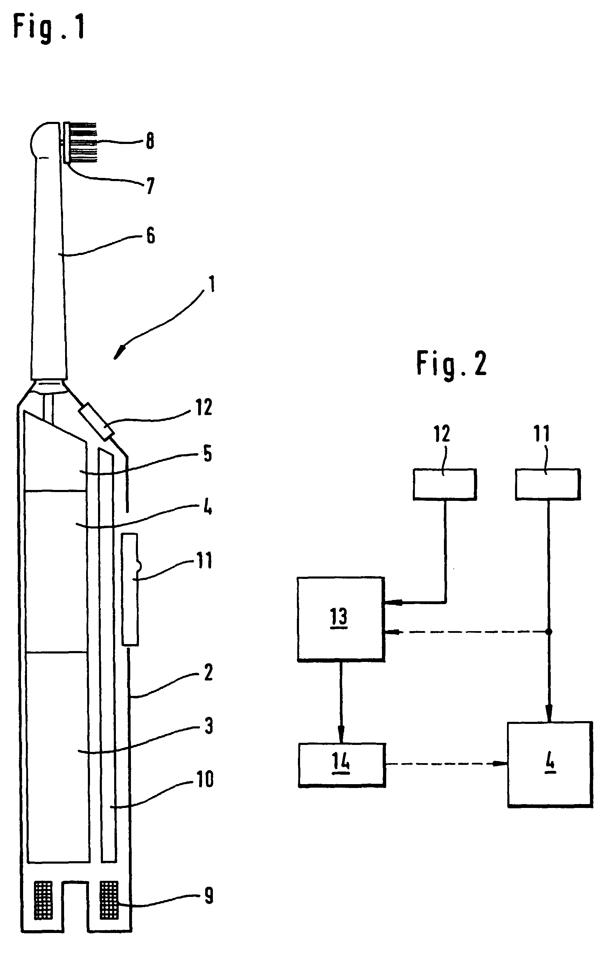

In der Fig. 1 ist eine elektrische Zahnbürste 1 dargestellt, bei der in einem Gehäuse 2 ein Akkumulator 3, ein Motor 4 und ein Getriebe 5 untergebracht sind. Auf ein freies Ende der elektrischen Zahnbürste 1 ist ein Trägerteil 6 aufgesteckt, das einen Borstenträger 7 trägt, von dem Borsten 8 abstehen. Im eingeschalteten Zustand der elektrischen Zahnbürste 1 wird dieser Borstenträger 7 von dem Motor 4 über das Getriebe 5 in eine Bewegung versetzt, insbesondere in eine Drehbewegung um eine zu den Borsten 8 des Borstenträgers 7 etwa parallele Achse.

In dem Gehäuse 2 der elektrischen Zahnbürste 1 sind des weiteren eine Spule 9 und eine Leiterplatte 10 untergebracht. Die Spule 9 dient der Aufladung des Akkumulators 3 und auf der Leiterplatte 10 sind elektronische Bauteile untergebracht, die für den Betrieb der elektrischen Zahnbürste 1 erforderlich sind.

Von außen zugänglich sind in der Wand des Gehäuses 2 ein Ein-/Ausschalter 11 und ein Taster 12 vorgesehen. Mit dem Ein-/Ausschalter 11 kann ein Benutzer die elektrische Zahnbürste 1 in den eingeschalteten Zustand versetzen und wieder ausschalten. Der Taster 12 stellt ganz allgemein Mittel dar, mit denen, wie noch näher erläutert werden wird, der Beginn einer Putzzeitdauer von dem Benutzer ausgelöst werden kann. Bei diesen Mitteln muß es sich nicht zwingend um den Taster 12 handeln, sondern es können auch ganz allgemein sonstige elektrische Schalteinrichtungen vorgesehen sein, wie beispielsweise ein Reed-Kontakt, eine Lichtschranke oder dergleichen.

In der Fig. 2 sind der Motor 4, der Ein-/Ausschalter 11 und der Taster 12 als Block dargestellt. Des weiteren ist ein Zeitglied 13 und eine Anzeigevorrichtung 14 vorgesehen. Der Ein-/Ausschalter 11 ist mit dem Motor 4 verbunden, so daß ein Benutzer, wie erwähnt, mit Hilfe des Ein-/Ausschalters 11 den Motor 4 ein- und ausschalten kann. Der Taster 12 beaufschlagt das Zeitglied 13, das seinerseits mit der Anzeigevorrichtung 14 verbunden ist. Des weiteren ist es möglich, daß der Ein-/Ausschalter 11 ebenfalls das Zeitglied 13 beaufschlagt, und/oder daß die Anzeigevorrichtung 14 mit dem Motor 4 verbunden ist.

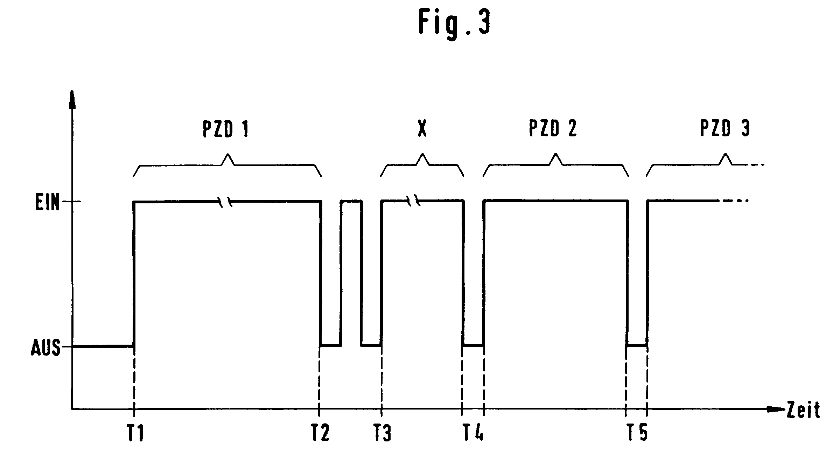

Anhand der Fign. 2 und 3 wird nachfolgend die Funktionsweise der elektrischen Zahnbürste 1 erläutert. In der Fig. 3 ist dabei ein Zeitdiagramm dargestellt, in dem über einer Zeitachse der eingeschaltete (EIN) und ausgeschaltete (AUS) Betriebszustand des Motors 4 der elektrischen Zahnbürste 1 aufgetragen ist.

In einem Zeitpunkt T1 schaltet ein Benutzer die elektrische Zahnbürste 1 mit Hilfe des Ein-/Ausschalters 11 ein. Der Borstenträger 7 führt nunmehr die eingangs erwähnte Drehbewegung aus und der Benutzer kann die Zahnreinigung durchführen und beginnt zu diesem Zweck die Zähne eines ersten Quadranten zu reinigen.

Mit dem Einschalten des Motors 4 beginnt auch das Zeitglied 13 zu laufen. Damit dies automatisch und gleichzeitig erfolgen kann, muß die erwähnte Verbindung des Ein-/Ausschalters 11 mit dem Zeitglied 13 vorhanden sein. Auf diese Weise wird dann eine erste Putzzeitdauer PZD1 durch das Einschalten des Motors 4 ab dem Zeitpunkt T1 automatisch ausgelöst.

Alternativ ist es möglich, daß die Verbindung des Ein-/Ausschalters 11 mit dem Zeitglied 13 nicht vorhanden ist und deshalb der Benutzer selbst das Zeitglied 13 mit Hilfe des Tasters 12 starten muß. In diesem Fall kann also der Einschaltzeitpunkt des Motors 4 vor dem Zeitpunkt liegen, an dem das Zeitglied 13 zu laufen beginnt.

Nach einer vorgegebenen Putzzeitdauer, insbesondere nach einer Putzzeitdauer von etwa 30 Sekunden, zeigt das Zeitglied 13 an, daß die Putzzeitdauer für den derzeitigen Quadranten vorüber ist und der Benutzer zur Reinigung des nächsten Quadranten seiner Zähne übergehen kann.

Diese Anzeige des Ablaufs der Putzzeitdauer kann optisch, akustisch oder auf sonstige Weise erfolgen. In diesen Fällen ist die Verbindung der Anzeigevorrichtung 14 mit dem Motor 4 nicht erforderlich.

Insbesondere ist es möglich, diesen Ablauf der Putzzeitdauer PZD1 durch ein kurzzeitiges merhfaches Aus- und Einschalten des Motors 4 anzuzeigen. Dies ist in der Fig. 3 durch das zweifache Aus- und Einschalten des Motors 4 in dem Zeitraum zwischen den Zeitpunkten T2 und T3 dargestellt. Damit diese Art der Anzeige möglich ist, muß die erwähnte Verbindung zwischen der Anzeigevorrichtung 14 und dem Motor 4 vorhanden sein.

Der Ablauf der Putzzeitdauer PZD1 wird von dem Zeitglied 13 nur angezeigt; der Motor 4 verbleibt im eingeschalteten Zustand und die Putzzeitdauer PZD2 für den nächsten Quadranten wird noch nicht gestartet. Dadurch kann der Benutzer den tatsächlichen Übergang von dem derzeitigen Quadranten zu dem nächsten Quadranten völlig frei selbst bestimmen, ohne daß die Putzzeitdauer für den nächsten Quadranten dadurch beeinflußt wird. Dies ist in der Fig. 3 durch einen Zeitraum X zwischen den Zeitpunkten T3 und T4 dargestellt.

Sobald der Benutzer nun tatsächlich vom derzeitigen Quadranten auf den nächsten Quadranten seiner Zähne wechselt, betätigt er den Taster 12. Dies ist in der Fig. 3 im Zeitpunkt T4 der Fall. Damit startet das Zeitglied 13 die zu dem zweiten Quadranten zugehörige Putzzeitdauer PZD2 nach dem Zeitpunkt T4.

Als Bestätigung für den Beginn der nächsten Putzzeitdauer PZD2 ist es möglich, daß das Zeitglied mittels der Anzeigevorrichtung 14 ein optisches, akustisches oder sonstiges Signal abgibt. Ebenfalls ist es möglich, daß der Motor 4 beispielsweise einmal aus- und eingeschaltet wird, wie dies in der Fig. 3 gezeigt ist.

Es ist möglich, daß der Benutzer schon vor Ablauf beispielsweise der Putzzeitdauer PZD2 zum nächsten, also zum dritten Quadranten seiner Zähne wechseln will. Dies ist dadurch ohne weiteres möglich, daß der Benutzer diesen Wechsel mit Hilfe des Taster 12 an das Zeitglied 13 weitergibt, das dann - vor Ablauf der vorhergehenden Putzzeitdauer PZD2 - die zugehörige nächste Putzzeitdauer PZD3 startet. Dies ist in der Fig. 3 im Zeitpunkt T5 dargestellt.

Auf diese Weise werden alle Quadranten des Gebisses des Benutzers durchlaufen und gleichmäßig gereinigt. Am Ende der gesamten Zahnreinigung ist es möglich, daß das Zeitglied 13 über die Anzeigevorrichtung 14 ein von den bisherigen Signalen unterschiedliches Endesignal abgibt.

## Patentansprüche

1. Elektrische Zahnbürste (1) mit einem Zeitglied (13) zur Anzeige des Ablaufs mehrerer Putzzeitdauern (PZD1, PZD2) eines Putzzyklus und mit einem Ein-/Ausschalter (11), **dadurch gekennzeichnet**, daß mittels einer elektrischen Schalteinrichtung (12), die an das Zeitglied (13) angeschlossen ist, der Beginn der zweiten oder gegebenenfalls weiteren Putzzeitdauer (PZD2) durch individuelle Betätigung der Schalteinrichtung (12) durch den Benutzer vor Ablauf der vorhergehenden Putzzeitdauer auslösbar ist.

2. Elektrische Zahnbürste (1) nach Patentanspruch 1, **dadurch gekennzeichnet**, daß die erste Putzzeitdauer (PZD1) mit dem Einschalten der elektrischen Zahnbürste (1) durch den Ein-/Ausschalter (11) automatisch ausgelöst wird.

3. Elektrische Zahnbürste (1) nach einem der vorhergehenden Patentansprüche, **dadurch gekennzeichnet**, daß als elektrische Schalteinrichtung zum Auslösen des Beginns (T1, T4) der Putzzeitdauer (PZD2) ein Taster (12) vorgesehen ist.

4. Elektrische Zahnbürste (1) nach einem der vorhergehenden Patentansprüche, **dadurch gekennzeichnet**, daß zur Anzeige des Ablaufs (12) der Putzzeitdauer (PZD1) die elektrische Zahnbürste (1) kurzzeitig mehrfach aus- und eingeschaltet wird.

## Claims

1. An electric toothbrush (1) with a timing element (13) to indicate the end of several cleaning periods (PZD1, PZD2) of a cleaning cycle and with an On/Off switch (11), **characterized in that** by means of an electric switching device (12) connected to the timing element (13), the beginning of the second cleaning period or, where applicable, further cleaning periods (PZD2), can be triggered by individual actuation of the switching device (12) by the user before the preceding cleaning period ends.

2. The electric toothbrush (1) as claimed in patent claim 1, **characterized in that** the first cleaning period (PZD1) is triggered automatically by switching on the electric toothbrush (1) by means of the On/Off switch (11).

3. The electric toothbrush (1) as claimed in any one of the preceding patent claims, **characterized in that** the electric switching device for triggering the beginning (T1, T4) of the cleaning period (PZD2) is a push-button (12).

4. The electric toothbrush (1) as claimed in any one of the preceding patent claims, **characterized in that** the electric toothbrush (1) is switched off and on briefly several times to indicate the end (T2) of the cleaning period (PZD1).

## Revendications

1. Brosse à dents électrique (1) comportant un élément temporisé (13), pour l'indication de l'écoulement de plusieurs durées de nettoyage (PZD1, PZD2) d'un cycle de nettoyage, et comportant un commutateur de marche/arrêt (11), caractérisé en ce qu'au moyen d'un mécanisme de commutation électrique (12) qui est raccordé à l'élément temporisé (13), le commencement de la seconde ou le cas échéant autre durée de nettoyage (PZD2) peut être enclenché par un actionnement séparé du mécanisme de commutation (12) par l'utilisateur avant l'écoulement de la durée de nettoyage précédente.

2. Brosse à dents électrique (1) suivant la revendication 1, caractérisé en ce que la première durée de nettoyage (PZD1) est enclenchée automatiquement avec l'enclenchement de la brosse à dents électrique (1) par le commutateur de marche/arrêt (11).

3. Brosse à dents électrique (1) suivant l'une des revendications précédentes, caractérisé en ce que, en tant que mécanisme de commutation électrique pour l'enclenchement du commencement (T1, T4) de la durée de nettoyage (PZD2), il est prévu un bouton (12).

4. Brosse à dents électrique (1) suivant l'une des revendications précédentes, caractérisé en ce que, pour l'indication de l'écoulement (T2) de la durée de nettoyage (PZD1), la brosse à dents électrique (1) est arrêtée et enclenchée plusieurs fois pour de courts moments.
